# DEMANDE DE BREVET EUROPEEN

(11) **EP 0 915 103 A1**
(43) Date de publication de la demande: **12.05.1999**
(21) Numéro de dépôt: 98402667.4
(22) Date de dépôt: 27.10.1998
(51) Int. Cl.: C08F 2/28

(54) **Dispersions aqueuses stables à base de polymères hydrosolubles contenant un dispersant cationique comportant des motifs hydrophobes**

(30) Priorité: 04.11.1997 FR 9713859
(71) Demandeur: ELF ATOCHEM S.A., 92800 Puteaux, Hauts-de-Seine (FR)
(72) Inventeur: Tembou Nzudie, Denis, 27470 Serquigny (FR); Collette, Christian, 75005 Paris (FR)

(57) **Abrégé**

On peut préparer des dispersions eau dans eau à base de polymères hydrosolubles en utilisant un dispersant polymère comportant des motifs hydrophobes.

Les dispersions de l'invention sont stables au stockage et ont une faible viscosité.

## Description

La présente invention se rapporte aux nouveaux dispersants à base de polymères cationiques comprenant des motifs hydrophobes permettant d'obtenir par polymérisation en émulsion eau dans eau, des dispersions de polymères hydrosolubles de faible viscosité et de forte concentration en polymères hydrosolubles.

Les polymères hydrosolubles sont utilisés pour différentes applications et en particulier comme floculants pour le traitement des eaux urbaines résiduaires et industrielles, la déshydratation des boues générées, comme épaississant et agent de traitement des sols. Les systèmes aqueux de tels polymères hydrosolubles à haut extrait-sec ont la forme d'un gel et présentent des viscosités très élevées, qui rendent leur manipulation et stockage difficiles. Le problème posé à l'homme du métier est la réalisation de tels systèmes aqueux mais ayant à la fois un extrait-sec élevé et une faible viscosité.

Les procédés conventionnels de synthèse de ces polymères comprennent la polymérisation en solution, suspension inverse et émulsion inverse. La solution et la suspension inverse conduisent à des produits à l'état de poudre qui présentent l'inconvénient de générer de la poussière au moment de l'utilisation, de se dissoudre difficilement dans l'eau et de ne pas pouvoir former des solutions aqueuses de polymères de concentration élevée qui puissent être manipulées aisément. Outre cette mise en oeuvre incommode qui est propre à l'état pulvérulent du produit, ces deux procédés sont handicapés en terme de productivité, d'une part en raison de la faible concentration en monomère utilisée en cours de polymérisation, et d'autre part à cause d'une étape de séchage et/ou broyage induisant une augmentation du temps de cycle et un surcoût de consommation d'énergie. Le procédé en émulsion inverse conduit quant à lui à un produit ayant un solvant organique polluant et une stabilité peu satisfaisante.

Pour remédier à ces inconvénients, il a été développé une nouvelle technique de polymérisation conduisant à des dispersions aqueuses de polymères hydrosolubles dont l'originalité réside sur le plan de la présentation, c'est-à-dire exemptes de solvant polluant, ne générant pas de poussière, rapidement solubles dans l'eau, de faible viscosité, à taux de polymère élevé, et prêtes à l'emploi. En revanche cette technologie nécessite des dispersants polymères adaptés.

Certains auteurs ont préparé des polymères hydrosolubles cationiques, amphotères ou non ioniques par polymérisation de monomères hydrosolubles en présence de dispersant polymère de faible masse. EP 170 394 décrit une dispersion de particule de gel de polymère de taille supérieure à 20 µm dans une solution de dispersant de poly(acrylate de sodium) ou de chlorure de polydiallyldiméthylammonium (poly-DADMAC). Cependant ce produit présente l'inconvénient d'avoir une augmentation de la viscosité après une longue période de stockage. La viscosité ne pouvant être diminuée qu'après cisaillement ou agitation.

US 183466, EP 525751 A1, US 4 929 655, US 5 006 590 et EP 657 478 A2 proposent le cas de polymérisation précipitante en milieu salin de monomères hydrosolubles dont le polymère précipite sous forme de particules, puis dispersé par le biais de l'agitation et stabilisé par des dispersants polymères de faible masse, solubles quant à eux en milieu salin.

Les documents DE 4216167A1, US 5403883 décrivent une technique d'obtention des dispersions sans sel, de faible viscosité par polymérisation en présence du dispersant poly-DADMAC, d'un mélange de monomères hydrophiles, hydrophobes et éventuellement amphiphiles. Sur la même base EP 0670333 décrit les dispersions de polymères réticulés par l'ajout dans le mélange de monomères à polymériser d'un agent réticulant tel que le N-méthylol acrylamide ou le N,N méthylène bisacrylamide. Une post-addition du même dispersant permet une diminution de la viscosité des systèmes précédemment décrits (CA 3123460). Cependant, elle a pour effet d'augmenter le taux de dispersant et de conduire à une dispersion ayant un faible taux de polymère dispersé.

L'état de l'art montre que la viabilité d'un procédé de synthèse de dispersion de polymères hydrosolubles reposent sur l'obtention d'un produit sans sel, de faible viscosité, ayant un taux élevé de polymère dispersé qui doit être de haute masse et un faible taux de dispersant qui doit être de faible masse tout en étant performant pour l'application finale.

La demanderesse a maintenant trouvé que l'on peut préparer des dispersions de polymères hydrosolubles sans sel à propriétés améliorées, en l'occurrence une faible viscosité et un extrait sec élevé par l'utilisation de dispersants à base de polymères cationiques, amphotères ou non ioniques et comprenant des motifs hydrophobes.

Il est préférable que le dispersant renferme des motifs cationiques de façon à pouvoir jouer un rôle dans les applications suivantes : floculant, rétention papier, agent facilitant le nettoyage de saleté sur divers supports (textile par exemple), dispersion de charges, agent d'inhibition pour le transfert de pigments et colorants sur divers supports tel que le textile, dépaississant.

L'invention a pour premier objet les dispersants polymères contenant des motifs hydrophobes.

Les dispersants selon l'invention sont des polymères contenant des restes de :
a) de 15 à 99 % en mole et de préférence de 20 à 80 % en mole d'au moins un monomère A hydrosoluble qui peut être :
   - un monomère **A1** répondant aux formules générales suivantes : 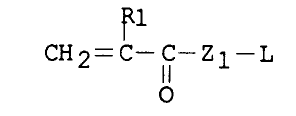 dans laquelle
      R1 = H ou CH3
      Z1 = O, NH ou NR2 avec R2 un groupe alkyl ou hydroxyalkyl en C1-C6 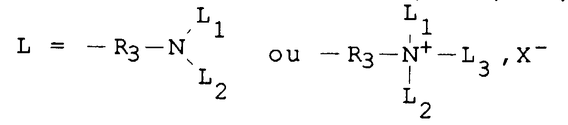 ou R3 = alkyl ou hydroxyalkyl en C1-C6 et L1, L2, L3 représentent séparément un H, un alkyl ou un hydroxyalkyl en C1-C6, un cycloalkyl en C5-C12, un aryl ou alkylaryl en C6-C12
      X est un ion monovalent tel que Cl, SNC,... 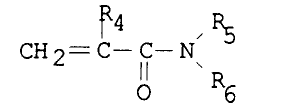 dans laquelle
      R4 = H ou un méthyl
      R5 et R6 représentent séparément un H, un alkyl ou un hydroxyalkyl en C1-C6 ou un cycloalkyl en C5-C12
   - Les monomères renfermant des fonctions acide carboxylique et leurs dérivés tels que l'acide méthacrylique, l'acide acrylique et leurs sels.
   - Les monomères renfermant des fonctions ammonium quaternaires tels que le chlorure de diallyldiméthyl ammonium désigné par DADMAC, ou l'anhydride maléique imidizé et salifié.
   - tout autre monomère hydrosoluble différent de ceux cités précédemment et polymérisable par voie radicalaire en émulsion.
b) de 1 à 85 % en mole et de préférence de 20 à 80 % d'au moins un monomère hydrophobe B choisi dans le groupe renfermant les monomères **B1** répondant à la formule suivante : 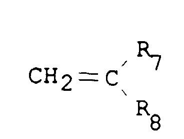 dans laquelle
   R7 représente un H ou un groupe alkyl en C1-C12, ou un cycloalkyl en C5-C12 ou un aryl en C6-C12 ou un arylalkyl en C8-C32.
   R8 représente un H ou un groupe alkyl en C1-C12, ou un cycloalkyl en C5-C12 ou un aryl en C6-C12 ou un arylalkyl en C8-C32.
   R7 et R8 pouvant être différents ou identiques
      - les monomères **B2** répondant à la formule générale suivante : 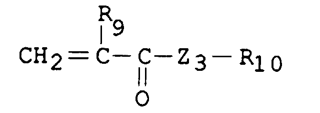
      dans laquelle
      R9 = H ou CH3
      Z3 représente un O, NH3 ou NR11 avec R11 = alkyl en C1-C4
      R10 représente un groupe alkyl en C1-C32, cycloalkyl en C5-C12 ou aryl en C6-C12 ou arylalkyl en C8-C32

      - tout autre monomère B3 ayant une double liaison polymérisable tel que le chlorure de vinylidène, le florure de vinylidène, le chlorure de vinyle, le butadiène, le chloroprène...
c) de 0 à 30 % d'au moins un monomère amphiphile C pouvant être choisi dans le groupe constitué de :
   - les monomères **C1** répondant à l'une des formules générales suivantes: 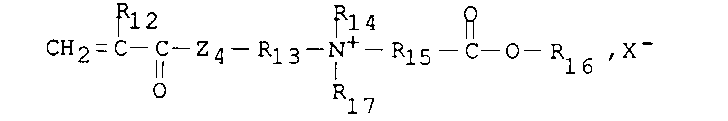
   dans laquelle
   Z4 = O, NH, NR21, R21 étant un groupe alkyl en C1-C6 ou cycloalkyl en C5-C12
   R12 = H ou un méthyl
   R13, R14, R15, R17 représentent séparément un alkyl ou hydroxyalkyl en C1-C6 ou cycloalkyl en C5-C12
   R16 représente un alkyl en C1-C32, aryl et/ou arykalkyl en C8-C32
   X est un halogène, pseudohalogen, S04CH3, acétate, SNC... 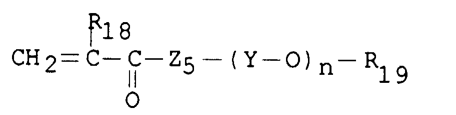 dans laquelle
   R18 = H ou méthyl
   Z5 = O, NH, NR20 avec R20 = alkyl ou hydroxyalkyl en C1-C6
   Y = alkyl en C1-C6
   n est un nombre entier compris entre 1 et 50
   R19 = alkyl en C1-C32, aryl en C6-C32 ou arylalkyl en C6-C32

   - les molécules **C2** répondant à la formule générale 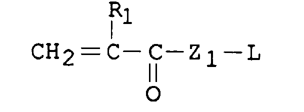
   dans laquelle
   R1 = H ou CH3
   Z1 = O, NH ou NR2 avec R2 un groupe alkyl ou hydroxyalkyl en C1-C16 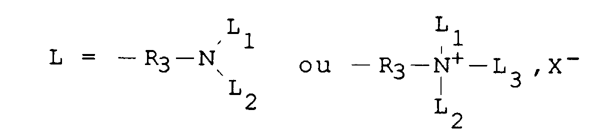
   ou R3 = alkyl ou hydroxyalkyl en C1-C18 et L1, L2, L3 représentent séparément un H ou un alkyl ou un hydroxyalkyl en C1-C18, un cycloalkyl en C5-C18 ou un arylalkyl en C7-C32.

Les exemples typiques de ces dispersants sont le copolymère à base de styrène et de chlorure d'acryloxyléthyltriméthyl ammonium désigné par ADAMQUAT MC, et les polymères à base d'anhydride maléique imidisés puis salifiés ou quaternisés et contenant :
- de 15 à 90 % en mole et de préférence de 20 à 60 % d'anhydride maléique,
- de 10 à 85 % en mole et de préférence de 40 à 80 % d'au moins un monomère hydrophobe copolymérisable avec l'anhydride maléique.

Les polymères dispersants selon l'invention sont préparés selon un procédé batch ou semi-continu par copolymérisation radicalaire en solution dans un solvant ou un mélange de solvants à bas point d'ébullition. L'étape de polymérisation est suivie de la distillation de solvant à bas point d'ébullition et d'une addition d'eau pour obtenir une présentation de dispersant en solution aqueuse sans solvant polluant. Ces solvants sont en général des cétones, alcools et éther. Des exemples typiques de solvant sont l'acétone, la méthyl éthyl cétone, l'éthanol. La concentration totale des monomères peut varier de 5 à 75 % en poids et de préférence 20 à 50 %. On effectue la polymérisation en présence d'amorceur(s) qu'on utilise à raison de 0.1 à 4 % et de préférence de 0.5 à 2 % par rapport au poids total des monomères engagés. Comme amorceurs, on peut utiliser des peroxydes tels que le peroxyde de benzoyle, le peroxyde de lauryle, le peroxyde de succinyle et le perpivalate de tertiobutyle, ou des composés diazoïques tels que le 2,2'-azobis-isobutyronitrile, le 2,2'azobis-(2,4-dimethylvaleronitrile), et l'azodicarbonamide. On peut également opérer en présence de rayonnements UV et de photo-initiateurs tels que la benzophénone, la méthyl-2-anthraquinone ou le chloro-2-thioxanthone. La longueur des chaînes polymériques peut, si on le désire, être réglée à l'aide d'agents de transfert de chaînes tels que les alkylmercaptans, le tétrachlorure de carbone ou le triphénylméthane, utilisés à raison de 0,05 à 3 % par rapport au poids total de monomères. La température de réaction peut varier dans de larges limites, c'est-à-dire de -40°C à 200°C. Préférentiellement, on opère entre 50 et 95°C.

Les dispersants à base de copolymères d'anhydride maléique sont obtenus par imidisation des copolymères monomère hydrophobe/anhydride maléique par une diamine (par exemple le dimethylaminopropylamine) selon la technique décrite dans la littérature. Ce copolymère est ensuite salifié par un acide ou quaternisé par un hallogénure d'alkyle comme le chlorure de méthyle ou de benzyle (J. Applied Polymer Science 59,599-608 1996).

L'invention a comme deuxième objet les dispersions aqueuses de polymères hydrosolubles réticulés ou non obtenues par la polymérisation en présence des dispersants cités précédemment d'un mélange de monomères contenant :
- de 70 à 100 % molaire d'au moins un monomère hydrosoluble A
- de 0 à 30 % molaire d'au moins un monomère hydrophobe B
- de 0 à 30 % molaire d'au moins un monomère amphiphile C
- de 0 à 5 % molaire d'au moins un réticulant choisi dans le groupe contenant :
   · les monomères à fonction méthylol tel que le N-méthylol acrylamide
   · les monomères ayant au moins deux insaturations polymérisables tels que le N-N méthylène bisacrylamide ou le diméthacrylate d'éthylène glycol.

Le mélange de monomères représente de 10 à 40 % et de préférence de 15 à 30 % en poids du mélange réactionnel constitué de l'eau, du dispersant et des monomères, le dispersant représente de 1 à 30 % et de préférence de 2 à 15 % en poids. La polymérisation peut être amorcée par différents moyens, comme par les générateurs de radicaux libres tels que les peroxydes, les composés diazoïques ou les persulfates ou par irradiation. Le mode préféré selon l'invention est l'amorçage par le 2,2' Azo bis (2-aminopropane) hydrochloride, désigné ci-après par ABAH. Ces amorceurs peuvent être combinés avec un accélérateur de décomposition. La température de polymérisation est comprise entre 0 et 100°C et de préférence 40 et 95°C. La conversion est supérieure à 99 %.

Les dispersants ou dispersions de polymère hydrosoluble obtenus peuvent être utilisés pour les applications suivantes : floculant, rétention papier, agent facilitant le nettoyage sur divers supports (textile par exemple), dispersion de charges, agent d'inhibition pour le transfert de pigments et colorants sur divers supports (textile par exemple), épaississants.

Les exemples suivants illustrent l'invention sans la limiter.

Dans tous les exemples ci-après, les parts sont données en poids.

### Exemple 1

### a) Préparation d'un copolymère dispersant

Dans un réacteur de 1 litre, on introduit sous agitation 330 parts d'éthanol, 150 parts de méthyl éthyl cétone, 140 parts de styrène, 175 parts de solution aqueuse à 80 % de chlorure d'acryloxylethyltriméthyl ammonium (QUAT MC), 2 parts de n dodécyl mercaptan.

On porte le réacteur à 75°C sous balayage d'azote et on introduit ensuite 0.36 part de 2,2'-azobis-isobutyronitrile (AIBN), et 0.72 part de 2,2'azobis-2,4-dimethylvaleronitrile. La température est maintenue à 75°C pendant 2 heures et on rajoute 0.72 de 2,2'-azobis-isobutyronitrile (AIBN), et 0.72 part de 2,2'azobis-2,4-dimethylvaleronitrile. Après 2h30 de réaction, on amorce la distillation en montant progressivement la température double enveloppe de 78°C à 99°C. Après avoir soutiré environ 350 parts de solvant, on fait un appoint de 480 parts d'eau et on poursuit la distillation jusqu'à soutirage total du mélange éthanol/méthyl éthyl cétone.

### b) préparation de la dispersion de polymère à base de dispersant copolymère styrène / QUAT MC

Ce mode opératoire s'applique à tous les essais réalisés avec les dispersants copolymères styrène/QUAT MC.

Dans un réacteur de 1 litre, on introduit 173.4 parts d'eau, 156 parts de solution aqueuse à 33.4 % de dispersant préparé précédemment. On porte le réacteur à 65°C pendant 30 minutes sous balayage d'azote. Ensuite on introduit 89.5 parts de solution aqueuse à 80 % de chlorure d'acryloxyethyldiméthylbenzyl ammonium (QUAT BZ), 46.8 parts d'acrylamide à 50 % dans l'eau, 5 parts d'acrlate de butyle (ABu) et 0.01 part de ABAH dilué dans 5 parts d'eau. La température est maintenue à 65°C pendant 2 h. Ensuite on rajoute 0.1 part d'ABAH dilué dans 10 parts d'eau et on monte la température à 80°C. Après une heure et demie de réaction à 80°C, on rajoute 0.025 part d'amorceur dilué dans 5 parts d'eau. Après 1 heure et demie on renouvelle cette dernière opération et on maintient la température pendant 1 heure. Ensuite on refroidit à 30°C et on vide le réacteur.

*La viscosité de la dispersion ainsi obtenue de composition 20.2 % de polymère dispersé et 10.5* % *de polymère dispersant est de 9800 cp à 25°C.*

### Exemples 2, 3, 4, 5, 6

Identiques à l'exemple 1 sauf que dans la synthèse du dispersant, le ratio molaire styrène/QUAT MC est variable (3/1, 2.5/1, 2/1, 1.5/1 et 1/1). Les taux de polymère dispersé et dispersant sont également différents et résumés. (voir tableau page 9).

### Exemple 7

### c) Préparation de la dispersion de polymère hydrosoluble à base de dispersant copolymère styrène anhydride maléique imidisé par le dimethylaminopropylamine et salifié (SMA +).

Ce mode opératoire s'applique à tous les essais réalisés avec les dispersants copolymères styrène/anhydride maléique imidisé et salifié (SMA+).

Dans un réacteur de 1 litre, on introduit 275.3 parts d'eau, 11.2 parts d'acide acétique et 52 parts de copolymère styrène anhydride maléique (ratio molaire 2/1) imidisé. On porte le réacteur à 65°C pendant 30 minutes sous balayage d'azote. Ensuite on introduit 89.5 parts de solution aqueuse à 80 % de chlorure d'acryloxyethyldiméthylbenzyl d'ammonium (QUAT BZ), 46.8 parts d'acrylamide à 50 % dans l'eau, 5 parts d'acrylate de butyle (ABu) et 0.01 part de ABAH dilué dans 5 parts d'eau. La température est maintenue à 65°C pendant 2 heures. Ensuite on rajoute 0.1 part d'ABAH dilué dans 10 parts d'eau et on monte la température à 80°C. Après une heure et demie de réaction à 80°C, on rajoute 0.025 part d'amorceur dilué dans 5 parts d'eau. Après 1 heure et demie on renouvelle cette dernière opération et on maintient la température pendant 1 heure. Ensuite on refroidit à 30°C et on vide le réacteur.

### Exemples 8 et 9

identiques à l'exemple 7 sauf que la composition du dispersant copolymère styrène anhydride maléique imidisé a varié passant du ratio molaire styrène/anhydride maléique de 2/1 à 1/1 puis 3/1.

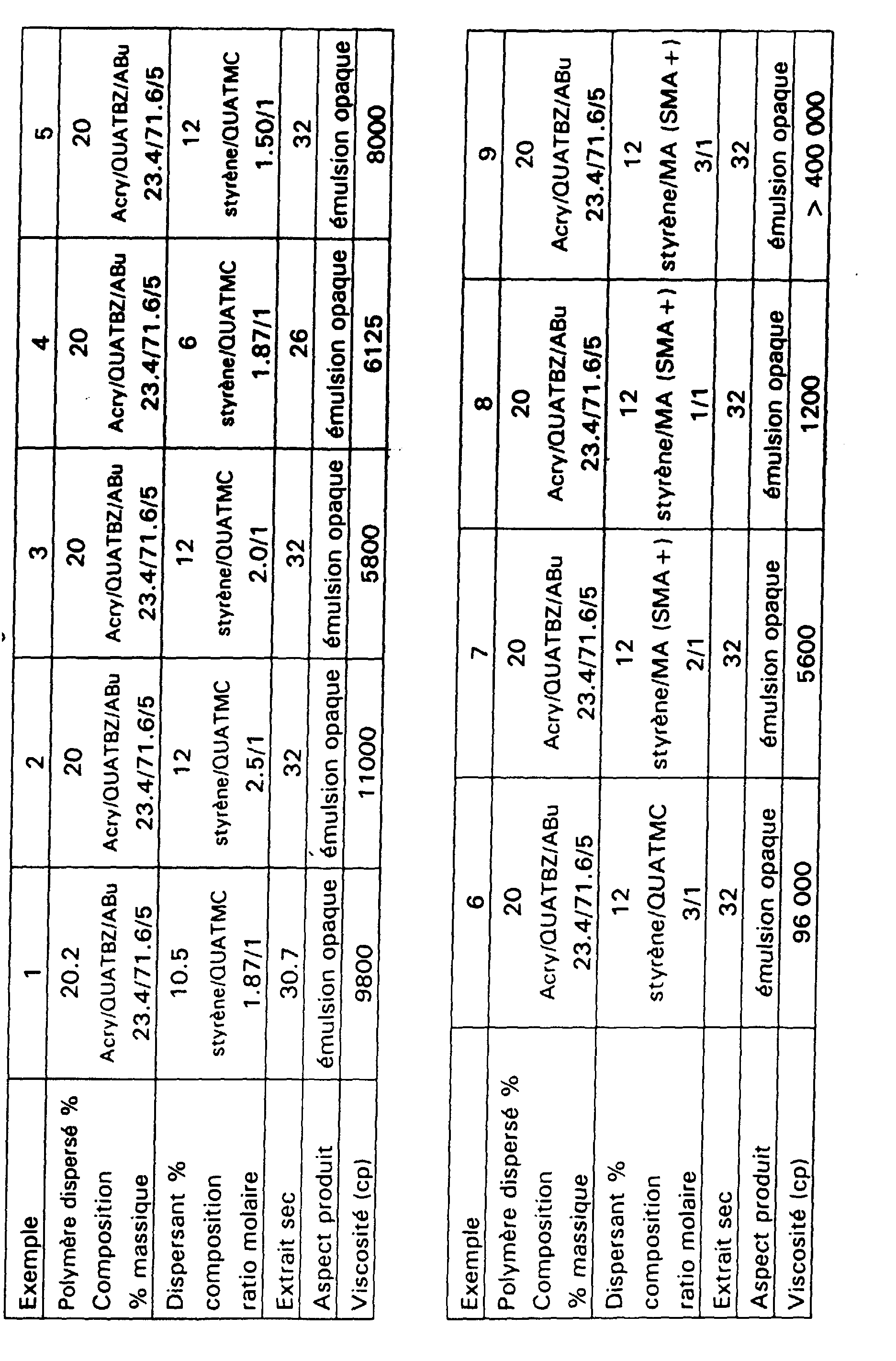

## Revendications

1. Dispersant pour dispersions aqueuses de polymères hydrosolubles contenant de :
a/ 15 à 99 % en mole de motifs dérivés par polymérisation d'au moins un monomère hydrosoluble A choisi dans le groupe contenant :
- les monomères renfermant des fonctions amines ou ammoniums quaternaires et répondant à la formule suivante : 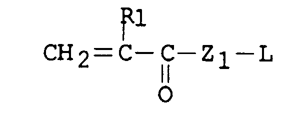
dans laquelle
R₁ = H ou CH₃
Z₁ = O, NH ou NR₂ avec R₂ un groupe alkyl ou hydroxyalkyl en C₁-C₆ 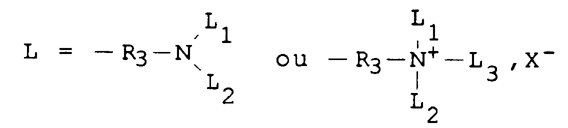
ou R₃ = alkyl ou hydroxyalkyl en C₁-C₆ et L₁, L₂, L₃ représentent séparément un H ou un alkyl ou un hydroxyalkyl en C₁-C₆, un cycloalkyl en C₅-C₁₂, un aryl ou alkylaryl en C₆-C₁₂
X est un ion monovalent tel que Cl, SNC,...
- les monomères renfermant des fonctions acide carboxylique tels que l'acide méthacrylique, l'acide acrylique et leurs sels
- les (méth)acrylamides, les N-alkylacrylamides et les N,N' dialkyl (méth)acrylamides en C₁-C₆.
b/ de 1 à 85 % en mole de motifs dérivés par polymérisation d'au moins un monomère hydrophobe B choisi dans le groupe contenant :
- les monomères éthyléniques, vinyliques, les (méth)acrylates d'alkyle en C₁-C₃₂, les monomères diéniques
- les monomères fluorés tels que, le chlorure de vinylidène, le florure de vinylidène.
c/ de 0 à 30 % en mole de restes d'au moins un monomère amphiphile C.

2. Dispersant selon la revendication 1 caractérisé en ce qu'il contient préférentiellement :
a/ de 20 à 80 % en mole de restes d'au moins un monomère hydrosoluble A
b/ de 20 à 80 % en mole de restes d'au moins un monomère hydrophobe B.

3. Dispersant selon la revendication 1 ou 2 caractérisé en ce que le monomère A est le chlorure d'acryloxyéthyldiméthylbenzyl ammonium ou le chlorure d'acryloxyléthyltriméthyl ammonium.

4. Dispersant selon l'une des revendications précédentes caractérisé en ce que le monomère B est le styrène, l'acrylate de béhényle ou le méthacrylate de stéaryle.

5. Dispersion aqueuse contenant un dispersant selon l'une des revendications 1 à 4 et un polymère hydrosoluble contenant :
- de 70 à 100 % en mole de restes d'au moins un monomère A
- de 0 à 30 % en mole de restes d'au moins un monomère B
- de 0 à 30 % en mole de restes d'au moins un monomère C
- de 0 à 5 % en mole de restes d'au moins un monomère D choisi dans le groupe constitué de monomères réticulants ayant au moins une fonction méthylol ou au moins deux insaturations.

6. Dispersion selon la revendication 5 caractérisée en ce que le monomère réticulant est le N-méthylol acrylamide ou le N,N méthylène bisacrylamide.

7. Dispersion selon la revendication 5 ou 6 caractérisée en ce que le dispersant représente de 1 à 30 % et de préférence de 2 à 15 % en poids du poids total de la dispersion.

8. Dispersion selon l'une des revendications 5 à 7 caractérisée en ce que le polymère hydrosoluble représente de 10 à 40 % et de préférence de 15 à 30 % en poids du poids total de la dispersion.
